(19) Europäisches Patentamt
European Patent Office
Office européen des brevets

(11) Publication number : 0 637 607 A2

(12) # EUROPEAN PATENT APPLICATION

(21) Application number : 94305337.1

(51) Int. Cl.$^6$ : C08K 3/22

(22) Date of filing : 20.07.94

(30) Priority : 05.08.93 US 102666

(43) Date of publication of application :
08.02.95 Bulletin 95/06

(84) Designated Contracting States :
DE ES FR GB IT NL

(71) Applicant : GENERAL ELECTRIC COMPANY
1 River Road
Schenectady, NY 12345 (US)

(72) Inventor : Glaser, Raymond Hans
4701 Ford Road
Mount Vernon, Indiana 47620 (US)

(74) Representative : Pratt, Richard Wilson et al
London Patent Operation
G.E. Technical Services Co. Inc.
Essex House
12/13 Essex Street
London WC2R 3AA (GB)

(54) **Flame retardant polyetherimide-containing compositions.**

(57) An improved, flame retardant and/or smoke suppressant polyetherimide-containing composition is provided. The flame retardance and smoke suppression capabilities of the polyetherimide-containing composition are improved by adding an effective amount of an oxide of molybdenum, preferably from about 0.1 to 15% by weight and more preferably between about 0.2 and 10 % by weight, based on the entire weight of the composition. The preferred polyetherimide containing composition comprises siloxane polyetherimide copolymers.



Jouve, 18, rue Saint-Denis, 75001 PARIS

Related Application

This application is related to copending U.S. Application Nos. 07/925,968 filed August 5, 1992; 07/739,610 filed August 2, 1991; and 07/739,614 filed August 2, 1991.

The present invention relates to flame retardant blends of polyetherimide-containing compositions. More particularly, the invention relates to polyetherimide-containing compositions having oxides of molybdenum as flame retardants and/or smoke suppressants.

## BACKGROUND OF THE INVENTION

Many applications for engineering thermoplastics, especially those in the transportation field, require that the thermoplastics be flame retardant. Flame retardant polyetherimide compositions have been used, for example, in the construction of aircraft and automobile parts as well as insulation for wiring. In addition to exhibiting good flame retardant properties, polyetherimides posses advantageous physical and chemical properties.

Flammability standards are embodied in the 1986 amendments to Part 25 - Air worthiness Standards - Transport Category Airplanes of Title 14, Code of Federal Regulations. (See, 51 Federal Register 26206, July 21, 1986 and 51 Federal Register 28322, August 7, 1986.) These standards are based on heat calorimetry tests developed at Ohio State University. Such tests are described in the above-cited amendments to 14 C.F.R. part 25, and are referred to commonly as the Ohio State University (or "O.S.U.") heat release tests.

In the area of flame retardants for plastics, U.S. patent No. 4,992,505 to Liu notes that the use of fire retardants and other additives in plastics is highly selective. It is recognized, for example, that flame retardants tend to be unpredictable and to have a high degree of specificity, i.e., they are not universally effective in all plastics. Rather, they may be inoperable or their effectiveness may vary from poor to excellent depending upon the particular plastic material to which they are added. The effectiveness of a particular material as a flame retardant in one class of thermoplastic thus may imply little as to its effectiveness in other classes of thermoplastics.

## SUMMARY OF THE INVENTION

Quite unexpectedly, the present inventor discovered that a novel flame retardant thermoplastic composition can be prepared by combining oxides of molybdenum with polyetherimide-containing compositions. These flame retardant polyetherimide compositions can be designed to pass the flammability tests cited in Part 25 of Title 14 in the Code of Federal Regulations. Accordingly, these compositions have utility at least as flame retardant or smoke suppressant construction materials.

## DETAILED DESCRIPTION OF THE PREFERRED EMBODIMENTS

As mentioned above, this invention relates to flame retardant and smoke suppressant polyetherimide-containing compositions. Suitable polyetherimides include those having repeating units of the formula

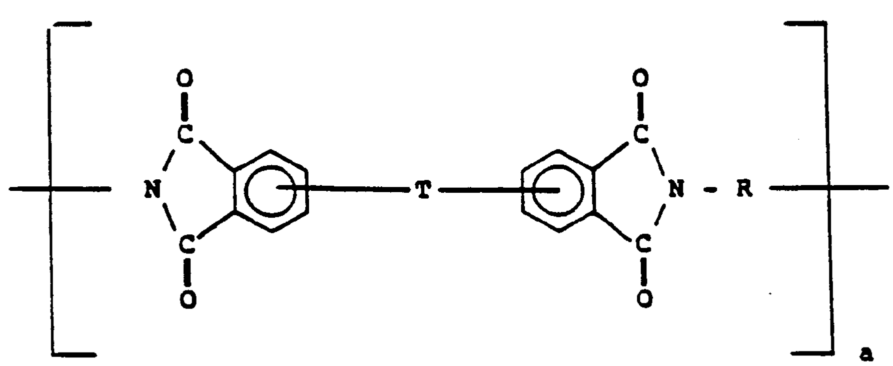

wherein "a" is an integer greater than 1, e.g., from 10 to 10,000 or more; and, optionally, repeating units of the formula

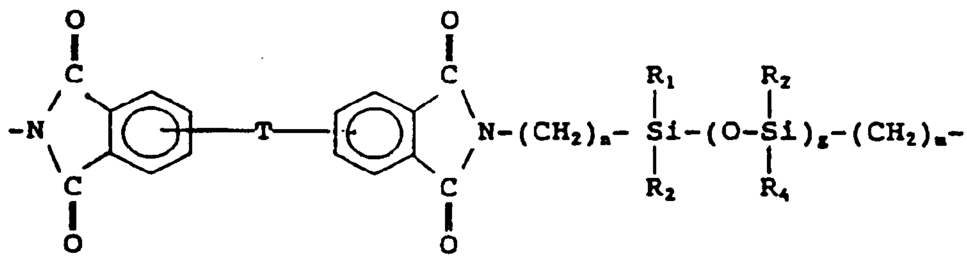

where T is -O- or a group of the formula -O-Z-O- wherein the divalent bonds of the -O- or the -O-Z-O group are in the 3, 3'; 3, 4'; 4, 3', or the 4, 4' positions;
Z is a member of the class comprising (A):

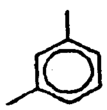,
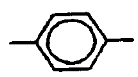,
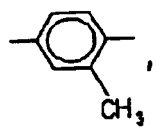,
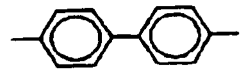,

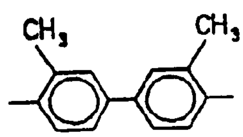
or
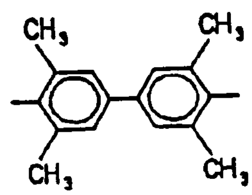

and (B) divalent organic radicals of the general formula

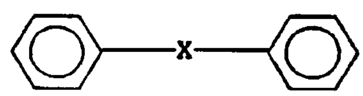

where x comprises divalent radicals of the formula:

$-C_yH_{2y}-$,

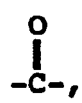
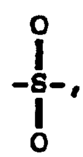

-O- or -S-

where y is an integer from 1 to about 5; and R is a divalent organic radical comprising (a) aromatic hydrocarbon radicals having from 6 to about 20 carbon atoms and halogenated derivatives thereof, (b) alkylene radicals having from 2 to about 20 carbon atoms, cycloalkylene radicals having from 3 to about 20 carbon atoms, and (c) divalent radicals of the general formula

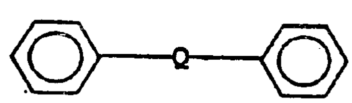

where Q comprises

-S-, -O-,

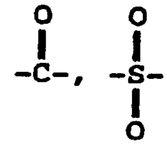

or $-C_xH_{2x}-$

wherein x is an integer from 1 to about 5; and n and m independently are integers from 1 to about 10 and g is an integer from 1 to about 40 and examples of groups represented by $R_1$-$R_4$ are, independently, -H, $-CH_3$, $-C_2H_{2z}CH_3$ or phenyl, where z is an integer from 1 to about 5. Preferably, $R_1$-$R_4$ is methyl.

The polyetherimide can optionally further comprise repeating units of the formula

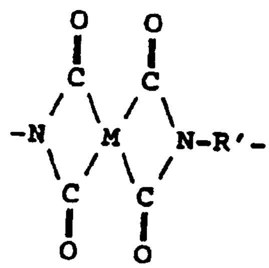

where M comprises

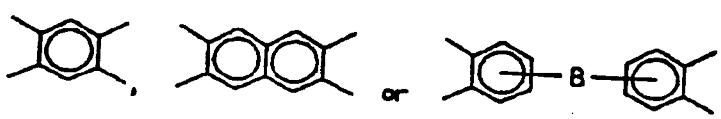

where B is -S- or

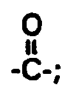

and R' is R as defined above or a group of the formula

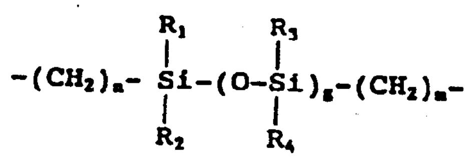

wherein n and m are, independently, integers from 1 to about 10 and g is an integer of from 1 to about 40 and examples of groups represented by $R_1$-$R_4$ are, independently, -H, $-CH_3$, $-C_2H_{2z}CH_3$ or phenyl, where z is an integer from 1 to about 5. Preferably, each of $R_1$-$R_4$ is methyl.

The polyetherimides can be prepared by any of the methods well known to those skilled in the art, including the reaction of an aromatic bis(ether anhydride) having the formula (I):

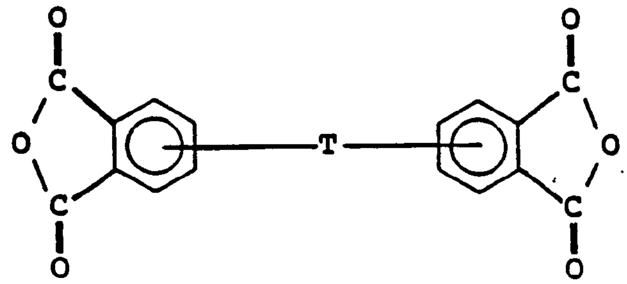

optionally, with an amine-terminated organosiloxane of the formula

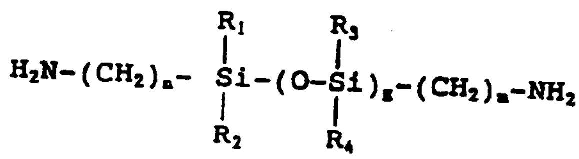

and an organic diamine of the formula (II):

(II) $H_2N\text{-}R\text{-}NH_2$

wherein T and R are defined as described above, and n and m independently are integers from 1 to about 10, preferably from 1 to about 5, and g is an integer from 1 to about 40, preferably from 5 to about 25 and examples of groups represented by $R_1$-$R_4$ are, independently, -H, $-CH_3$, $-C_2H_{2z}CH_3$ or phenyl, where z is an integer from 1 to about 5. Preferably, each $R_1$-$R_4$ is methyl.

Bis(ether anhydride)s of formula (I) include, for example,

1, 3-bis(2, 3-dicarboxyphenoxy) benzene dianhydride;
1, 4-bis (2,3-dicarboxyphenoxy) benzene dianhydride;
1, 3-bis (3, 4-dicarboxyphenoxyl) benzene dianhydride;
1, 4-bis (3, 4-dicarboxyphenoxy) benzene dianhydride; and
4, 4'-bis(phthalic anhydride) ether.

A preferred class of aromatic bis(ether anhydride)s within formula (I) includes compounds of formula (III), (IV) and (V) as follows:

(III)

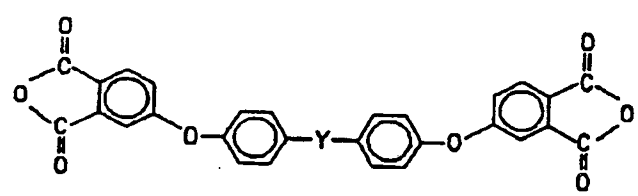

(IV)

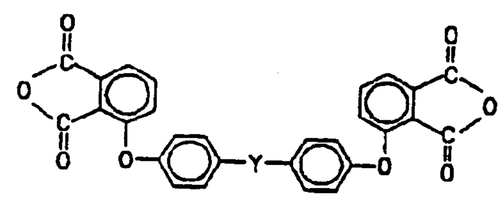

(V)

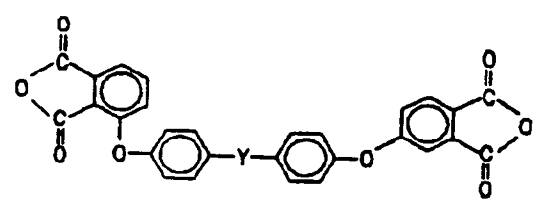

and mixtures thereof, where Y comprises -O-, -S-,

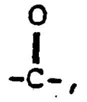 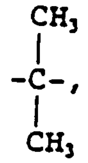 or 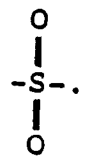

Aromatic bis(ether anhydride)s of formula (III) include, for example:

2, 2'-bis[4-(3,4-dicarboxyphenoxy) phenyl] propane dianhydride;
4, 4' -bis (3, 4-dicarboxyphenoxy) diphenyl ether dianhydride;
4, 4' -bis (3, 4-dicarboxyphenoxy) diphenyl sulfide dianhydride;
4, 4' -bis (3, 4-dicarboxyphenoxy) benzophenone dianhydride;
4, 4' -bis (3, 4-dicarboxyphenoxy) diphenyl sulfone dianhydride;

and mixtures thereof.

Aromatic bis (ether anhydride)s of formula (IV) include, for example:

2, 2-bis ([4-(2, 3-dicarboxyphenoxy) phenyl] propane dianhydride;
4, 4' -bis(2, 3-dicarboxyphenoxy) diphenyl ether dianhydride;
4, 4' -bis(2, 3-dicarboxyphenoxy) diphenyl sulfide dianhydride;
4, 4' -bis (2, 3-dicarboxyphenoxy) benzophenone dianhydride;
4, 4' -bis (2, 3-dicarboxyphenoxy) diphenyl sulfone dianhydride;

and mixtures thereof.

The aromatic bis(ether anhydride)s of formula (V) may be, for example,

4- (2, 3-dicarboxyphenoxy)-4' -(3, 4-dicarboxyphenoxy) -diphenyl-2, 2-propane dianhydride;
4- (2, 3-dicarboxyphenoxy) -4' -(3,4-dicarboxyphenoxy) diphenyl ether dianhydride;
4-(2, 3-dicarboxyphenoxy) -4' -(3, 4-dicarboxyphenoxy) diphenyl sulfide dianhydride;
4- (2, 3-dicarboxyphenoxy) -4' -(3, 4-dicarboxyphenoxy) benzophenone dianhydride;
4- (2, 3-dicarboxyphenoxy) -4' -(3, 4-dicarboxyphenoxy) diphenyl sulfone dianhydride, and mixtures of the foregoing.

When polyetherimide/polyimide copolymers are employed, a dianhydride, such as pyromellitic anhydride, is typically used in combination with the bis(ether anhydride).

Some of the aromatic bis(ether anhydride)s of formula (I) are shown in U.S. Patent No. 3,972,902 (Heath et al.). As described therein, the bis(ether anhydride)s can be prepared by the hydrolysis, followed by dehydration, of the reaction product of a nitro-substituted phenyl dinitrile with a metal salt of dihydric phenol compound in the presence of a dipolar, aprotic solvent.

Additional aromatic bis(ether anhydride)s also included by formula (I) above are shown by Koton, M.M., Florinski, F.S., Bessonov, M.I. and Rudakov, A.P. (Institute of Heteroorgainc Compounds, Academy of Sciences, U.S.S.R.), U.S.S.R. patent 257,010, November 11, 1969, Appl. May 3, 1967, and by M.M. Koton, F.S. Florinski, Zh. Org. Khin. 4(5), 774 (1968).

The organic diamines of formula (II) include, for example:

m-phenylenediamine;
p-phenylenediamine;
4, 4' -diaminodiphenylpropane;
4, 4' -diaminodiphenylmethane (commonly named 4, 4' -methylenedianiline);
4, 4' -diaminodiphenyl sulfide;
4, 4' -diaminodiphenyl sulfone;
4, 4' -diaminodiphenyl ether (commonly named 4,4' -oxydianiline);
1, 5 -diaminonaphthalene;
3, 3'-dimethylbenzidine;
3, 3'-dimethoxybenzidine;
2, 4 -bis(beta-amino-t-butyl)toluene;
bis(p-beta-amino-t-butylphenyl)ether;
bis(p-beta-methyl-o-aminophenyl)benzene;
1, 3 -diamino - 4 isopropylbenzene;
1, 2-bis(3-aminopropoxy)ethane;
benzidine;
m-xylylenediamine;

2, 4-diaminotoluene;
2, 6-diaminotoluene;
bis(4-aminocyclohexyl)methane;
3-methylheptamethylenediamine;
4, 4'-dimethylheptamethylenediamine;
2, 11-dodecanediamine;
2, 2'-dimethylpropylenediamine;
octamethylenediamine;
3-methoxyhexamethylenediamine;
2, 5-dimethylheptamethylenediamine;
3-methylheptamethylenediamine;
5-methylnonamethylenediamine;
1, 4-cyclohexanediamine;
1, 12-octadecanediamine;
bis(3-aminopropyl)sulfide;
N-methyl-bis(3-aminopropyl)amine;
hexamethylenediamine;
heptamethylenediamine;
nonamethylenediamine;
decamethylenediamine; and mixtures of the foregoing.

Suitable polyetherimides include, for example, ULTEM® 1000 polyetherimides from the General Electric Company.

The polyetherimide-containing compositions of the present invention may also contain copolymers of polyetherimides. Such copolymers include those having polyimide repeating units. These polyetherimide copolymers and their preparation are described by Williams et al. in U.S. Patent 3, 983, 093, incorporated herein by reference.

The flame retardant properties of polyetherimide-containing compositions which have been blended with other polymers may also be improved pursuant to this invention. In a particularly preferred embodiment of the present invention, polyetherimide blends may include, but are not necessarily limited to, blends with siloxane polyetherimides and/or copolymers of polyetherimide and siloxanes, e.g., SILTEM® siloxane polyetherimide from General Electric Co., and/or polycarbonates such as high molecular weight, thermoplastic, aromatic homopolycarbonates, copolycarbonates and copolyestercarbonates. Also contemplated by the present invention are blends of polyetherimide with at least one other plastic resin, such as, vinyl resins, polyester resins, polyamide resins, polyacetal resins, polyether resins, polyetherester resins, poly (etherimide ester) resins, poly (sulfone) resins, poly (ethersulfone) resins, as well as interpolymers comprising units of any of the foregoing resins.

Preparation of the blends and their respective components are well known in the art. See, for example, copending application serial No. 716,940, filed June 8, 1991 (ternary blend of polyetherimide, siloxane polyetherimide copolymer and polycarbonate), and U.S. Patents Nos. 4, 123,436 and 3, 153,008 (carbonates).

As noted in the Background of the Invention, each flame retardant has the potential to act very differently depending on the polymer, copolymer, blend, etc. to which it is added. In the case of the claimed polyetherimides, since certain oxides of molybdenum are in the hydrated form, there was serious concern that the high processing temperatures for polyetherimide-containing compositions would drive off the water and cause the resulting polymer to come apart and/or cause the surface properties of polyetherimide-containing compositions to be adversely affected. Additionally, in light of the fact that processing temperatures can also alter the mechanism by which flame retardants achieve their intended function, it was uncertain whether the high processing temperatures for polyetherimide-containing compositions would alter the mechanism by which oxides of molybdenum could potentially act as a flame retardant. There was also considerable concern over using oxides of molybdenum as flame retardants because even if the oxides of molybdenum were successful in retarding flame, it was thought that the particle size of the oxides could cause the polymer to tear apart. Furthermore, it was also thought that the oxides of molybdenum could adversely affect the surface properties of the polymer through, e.g., foaming or splay. This was feared for several reasons. First, the hydrated forms of the oxide of molybdenum could release volatiles such as water (steam) to cause foaming and/or splay or the oxide of molybdenum could cause degradation of the polymer backbone which would also release volatiles.

However, the present inventor surprisingly discovered that oxides of molybdenum could be added to polyetherimide-containing compositions so as to achieve increases in the flame retardant and/or smoke suppressant capabilities of the resulting resin. In this regard, the present inventor also discovered that the flame retardant and smoke suppressant capabilities could be achieved without substantially affecting the other physical properties of the resin, e.g., specific gravity, ductility, stress concentration, elongation, impact and surface

properties. In fact, based on at least the data in the Examples hereinafter, Applicant hypothesizes that the oxides of molybdenum actually stabilizes the polyetherimide-containing compositions thus imparting flame retardance and/or smoke suppression thereto. This is considerably different from the mechanism of most flame retardants which serve primarily to smother the flame rather than to actually stabilize the polymer.

The oxides of molybdenum can be blended with the polyetherimide-containing compositions according to the present invention by techniques known in the art, e.g., dry blending the ingredients and extruding the blend using a screw-type extruder. The oxides of molybdenum may be mixed with the above-described polyetherimide-forming reactants during the synthesis and polymerization of the polyetherimide.

The oxides of molybdenum are added to the polyetherimide-containing compositions in an amount sufficient to significantly improve the flame retardance and/or smoke suppression of the polymer. In this regard, it is noted that it takes very little of the oxides of molybdenum to significantly improve the flame retardance and/or smoke suppression capabilities of the polymer. For example, less than 0.1 % of the oxides of molybdenum are sufficient to increase the flame retardance and smoke suppression capabilities of the polymer but it is preferred that the amount of the oxides of molybdenum be greater than about 0.1 % of the overall polymer and more preferably greater than about 0.2 %. In a particularly preferred embodiment, the oxides of molybdenum are included in amounts greater than about 0.5 % of the overall polymer and most preferably in the range of from about 1.0 % to about 5% of the overall polymer.

However, the oxides of molybdenum should not be included in an amount so high that they adversely affect the physical properties of the resin to a significant degree. For example, it is preferred that the oxide be included in amounts which do not significantly increase the specific gravity and which do not significantly decrease the ductility, stress concentration, elongation and impact properties of the resulting polymer. For this reason, the oxides or molybdenum are usually included in amount which are not too much higher than about 10-15 % of the overall composition. It is preferred, however, that the amount of the oxides of molybdenum be less than about 10 % and more preferably less than about 7.5 % of the overall composition.

These amounts and effects on physical properties can be contrasted with, e.g., nylon wherein larger amounts of oxides of molybdenum are typically employed before a UL-94 V0 flame rating is achieved. However, when these larger amounts are included in the nylon polymers, there is a significant rise in the specific gravity of the polymer.

Virtually any oxides of molybdenum are contemplated as a flame retardant and/or smoke suppressant according to the present invention, including mixtures of the oxides of molybdenum. Preferred forms of the oxides of molybdenum include, for example, molybdic oxide having the formula $MoO_3$ and ammonium octamolybdate having the formula $(NH_4)_4Mo_8O_{26}$. Other oxides of molybdenum are known to those skilled in the art.

In addition to a polyetherimide and oxides of molybdenum, the compositions can optionally include other materials such as fillers, additives, reinforcing agents and the like. Examples of such optional materials include, but are not limited to, glass fiber, glass spheres, mica, clay, carbon fiber, carbon powder and the like.

The following example illustrates the improved flame retardance and/or smoke suppression that can be attained by the compositions of the present invention.

Examples

The compositions illustrated below were prepared by dry blending the ingredients and extruding the mix using a screw-type extruder. The extrudate was prepared into pellets and the pellets were injection molded into test specimens.

The heat release properties of the inventive and control compositions were determined by the O.S.U. heat release protocol described above and were measured in accordance with the procedures set forth in Part 25 of Title 14 of the Code of Federal Regulations. The amounts of the components are expressed in parts by weight.

| Formulation | 1 | 2 | 3 | 4 | 5 | 6 |
|---|---|---|---|---|---|---|
| Polyetherimide[1] | 100 | 99.9 | 99.8 | 99.5 | 99.0 | 98.0 |
| Molybdic Oxide[2] | -- | 0.1 | 0.2 | 0.5 | 1.0 | 2.0 |
| | | | | | | |
| Flame Retardant Properties | | | | | | |
| NBS Smoke Ds max | 100 | 90 | 70 | 58 | 35 | 28 |
| NBS Smoke Ds max | 155 | -- | -- | 80 | 32 | 14 |

1 - ULTEM®-D9000-1000 resin, a siloxane and polyetherimide-containing polymer made by the General Electric Company.

2 - CLIMAX Pol-U manufactured by CLIMAX Performance Materials Corporation.

As seen in the data presented above, the addition of a relatively minor amount of molybdic oxide provided substantial improvements to the flame retardance and smoke suppression of the polyetherimide. Corresponding results are also expected with other polyetherimide-containing compositions which include an oxides of molybdenum.

## Claims

1. A thermoplastic composition having improved flame retardance or smoke suppression comprising a polyetherimide-containing composition and a flame retarding or smoke suppressing amount of oxides of molybdenum.

2. The thermoplastic composition of Claim 1, wherein the polyetherimide in said Polyetherimide-containing composition has repeating units of the formula:

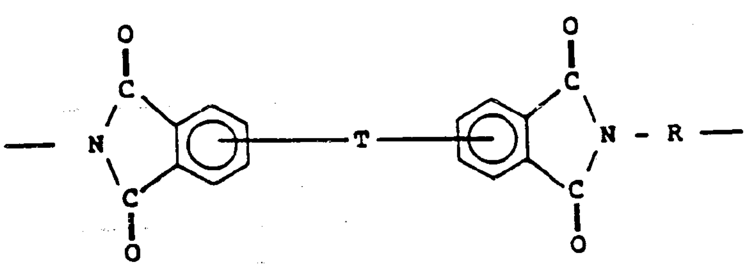

and, optionally, repeating units of the formula

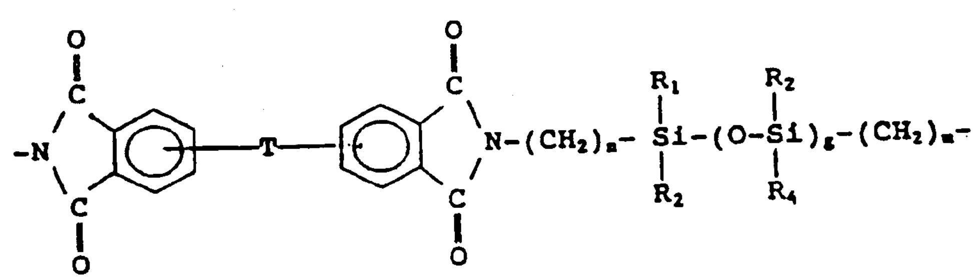

where T is -O- or a group of the formula -O-Z-O- wherein the divalent bonds of the -O- or the -O-Z-O group

are in the 3, 3'; 3, 4'; 4, 3', or the 4, 4' positions;
Z is

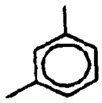, 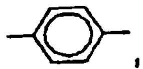, 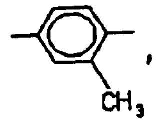, 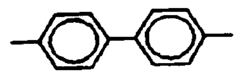,

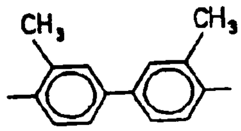 or 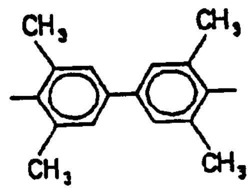

and (B) divalent organic radicals of the general formula

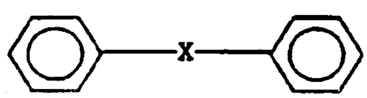

where x comprises divalent radicals of the formula

$-C_yH_{2y}-$,

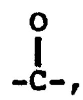, 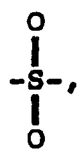,

-O- or -S-

where y is an integer from 1 to about 5; and R is a divalent organic radical comprising (a) aromatic hydrocarbon radicals having from 6 to about 20 carbon atoms and halogenated derivatives thereof, (b) alkylene radicals having from 2 to about 20 carbon atoms, and (c) divalent radicals of the general formula

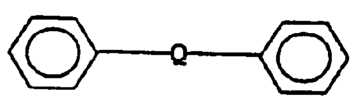

where Q comprises

-S-, -O-,

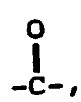, 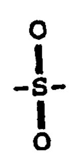

or $-C_xH_{2x}-$

wherein x is an integer from 1 to about 5; n and m independently are integers from 1 to about 10, g is an integer from 1 to about 40 and $R_1$-$R_4$ are, independently, -H, $-CH_3$, $-C_2H_{2z}CH_3$ or phenyl, where z is an integer from 1 to about 5.

**3.** The thermoplastic composition of Claim 2, wherein the polyetherimide-containing compositon further

comprises repeating units of the formula

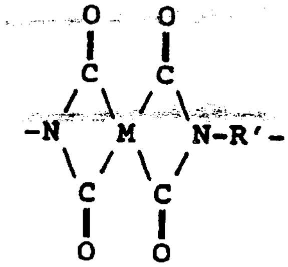

where M is

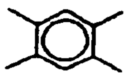, 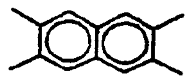 or 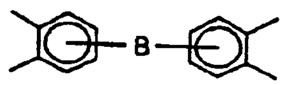

where B is -S- or

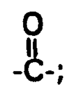

and R' is R or a group of the formula

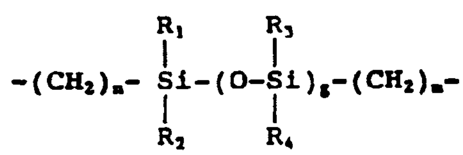

4. The thermoplastic composition of Claim 2, wherein n and m are integers from 1 to about 5, g is an integer from 5 to about 25 and each of $R_1$-$R_4$ is methyl.

5. The thermoplastic composition of Claim 2, wherein said polyetherimide-containing composition comprises a substantially random copolymer of siloxane polyetherimide.

6. The thermoplasic composition of Claim 2, wherein said polyetherimide-containing composition comprises a siloxane polyetherimide block copolymer.

7. The thermoplasic composition of Claim 2, wherein said polyetherimide-containing composition comprises a siloxane polyetherimide alternating copolymer.

8. The thermoplastic composition of Claim 1, wherein the amount of said oxides of molybdenum is greater than about 0.05 percent based on the weight of the entire composition

9. The thermoplastic composition of Claim 8, wherein the amount of said oxides of molybdenum is greater than about 0.1 percent based on the weight of the entire composition.

10. The thermoplastic composition of Claim 9, wherein the amount of said oxides of molybdenum is greater than about 0.2 percent based on the weight of the entire composition.

11. The thermoplastic composition of Claim 8, wherein the amount of said oxides of molybdenum is not sufficient to cause significant increase in the specific gravity of the resulting polymer.

12. The thermoplastic composition of Claim 8, wherein the amount of said oxides of molybdenum is not sufficient to cause significant decrease in the ductility and impact properties of the resulting polymer.

13. The thermoplastic composition of Claim 8, wherein the amount of said oxides of molybdenum is less than about 15 percent by weight based on the weight of the entire composition.

14. The thermoplastic composition of Claim 8, wherein the amount of said oxides of molybdenum is less than about 10 percent by weight based on the weight of the entire composition.

15. The thermoplastic composition of Claim 1, wherein said oxides of molybdenum comprises molybdic oxide, ammonium octamolybdate, or mixtures thereof.

16. The thermoplastic composition of Claim 15, wherein said oxides of molybdenum comprises molybdic oxide having the formula $MoO_3$.

17. The thermoplastic composition of Claim 1, further comprising at least one additional thermoplastic resin selected from vinyl resins, polyester resins, polyamide resins, polyacetal resins, polyether resins, polyetherester resins, poly (etherimide ester) resins, poly (sulfone) resins, poly (ethersulfone) resins, and interpolymers comprising units of any of the foregoing resins.

18. A thermoplastic composition having improved flame retardance or smoke suppression comprising a polyetherimide-containing composition and an amount of an oxides of molybdenum sufficient to result in a maximum smoke level of less than about 90 as measured by the National Bureau of Standards Smoke Chamber.

19. The thermoplastic composition of claim 18, wherein said smoke level is less than about 70 as measured by the National Bureau of Standards Smoke Chamber.

20. The thermoplastic composition of claim 19, wherein said smoke level is less than about 50 as measured by the National Bureau of Standards Smoke Chamber.

21. A thermoplastic composition having improved flame retardance or smoke suppression consisting essentially of a polyetherimide-containing composition and a flame retarding or smoke suppressing amount of oxides of molybdenum.

22. An article of manufacture comprising the thermoplastic resin composition of Claim 1.

23. A process for preparing the thermoplastic composition of Claim 1, comprising dry blending oxides of molybdenum with a polyetherimide-containing composition and then extruding the composition.

24. A process for preparing the thermoplastic composition of Claim 1, comprising mixing oxides of molybdenum with the polyetherimide-forming reactants during the synthesis and polymerization of the polyetherimide.